# EUROPEAN PATENT SPECIFICATION

(11) **EP 0 369 535 B1**
(45) Date of publication and mention of the grant of the patent: **30.08.1995**
(21) Application number: 89202857.2
(22) Date of filing: 10.11.1989
(51) Int. Cl.: H04Q 7/38, H04B 7/26

(54) **Cellular radio system**
Zellulares Funksystem
Système radio cellulaire

(30) Priority: 16.11.1988 GB 8826751
(43) Date of publication of application: 23.05.1990
(73) Proprietor: PHILIPS ELECTRONICS UK LIMITED, Croydon CR9 3QR (GB); Philips Electronics N.V., 5621 BA Eindhoven (NL)
(72) Inventor: Bailey, Alister John, Redhill Surrey RH1 5HA (GB); Vadgama, Sunil Keshavji, Redhill Surrey RH1 5HA (GB)
(74) Representative: Moody, Colin James

(56) References cited:
- EP-A- 0 126 557
- EP-A- 0 174 419
- TELESIS. no. 4, 1986, OTTAWA CA pages 33 - 39; O.AVELLANEDA: 'DMS-MTX Algorithms improve cellular traffic handling '

## Description

The present invention relates to a cellular radio system, particularly but not exclusively, to a system in which the cell sizes may be as small as 50m radius.

A cellular radio system is a radio system which provides radio coverage over a large area by using a network of relatively short range (low power) base stations rather than using a single long range (high power) base station. The base stations are generally organised in a regular pattern over the area to define adjoining cells (typically of between 2 and 20Km radius). Each user equipped with a mobile (which term includes a hand portable) transceiver is connected by a radio link to one of these base stations. When a user is moving around within a cell, he will possibly be moving further away from the base station through which he is communicating and correspondingly moving closer to one or more of the other base stations in adjoining cells. If the user moves so far away from the base station that he is becoming out of range then the system will reconnect him or "Handover" to a base station which he has been approaching. The system detects that a user is moving out of range of the base station through which he is communicating when the signal quality parameters deteriorate. When the system controller, termed the Mobile Switching Centre (MSC), detects that the signal quality parameters have fallen below acceptable levels it instructs all the base stations in the neighbourhood to inform it of the signal quality parameters received at that particular base station. A decision (usually based on the signal strength measurements) is then made by the MSC as to which adjacent cell should take the call. The call handover only takes place if the cell has a free channel and that the caller has adequate access authorisation. In currently used systems, radio network management functions including the call handover control are carried out by the MSC. This is a centrally controlled approach and enables the MSC to know what type of connection is required by a user together with other information such as charging account, charging rate in time units, the user's authorisation and so forth. Finally the MSC instructs the original base station to stop transmitting to, and receiving from, the mobile and instructs the selected base station to begin transmitting and receiving and makes a record of the transaction for system administration purposes. In practice several handovers are likely to occur especially if a mobile is moving in the vicinity of a boundary between two cells.

EP-A1-0126557 discloses a variant to the above described system in which some of the tasks associated with call handover are transferred from a mobile telephone switching office (MTSO) to cell sites. In the system disclosed each cell may comprise an omnidirectional antenna or a plurality of directional antennas. Each cell stores list of neighbouring cells which in embodiments having directional antennas take direction into account when determining neighbouring cells. When a mobile unit is moving out of range of its current cell site and the quality of the signals received from the mobile unit is deteriorating, the current cell site enters a cycle of signal strength measurements initially by checking its alternative directional antennas. If inadequate signal strengths are detected, the current cell site requests each of the adjacent cell sites on the stored list to report on not only signal strengths as detected by its antenna or each of its directional antennas but also channel availability. The results of the signal strength measurements are compared against thresholds and the cell site sends a hand-off request to the MTSO which request includes a list of candidate cell sites and directional antennas (if applicable) and the MTSO effects handover.

In order to provide sufficient capacity to cope with an increased demand and to make fuller use of the existing spectrum allocated for cellular radio systems it is anticipated that the future systems will comprise smaller cells, termed microcells, which may be as small as 50m radius. Each microcell will have its own base station and groups of base stations will be managed by an associated network controller. By limiting the transmitting power of the base stations, more reuse of bands of designated radio channels by nearby microcells is possible in a given geographical area. However the provision of microcells brings with it problems of "handover" due to users passing from microcell to microcell very rapidly and their dropping-out due to the signal quality decreasing below an acceptable level in a matter of several seconds. This means an adjacent microcell will have to provide quickly a replacement radio channel in order to maintain call continuity. For microcells managed by the same network controller this rapid handover can be achieved relatively easily because it is already acquainted with the call details. However when adjacent microcells are managed by different network controllers then the call handover from one network controller to another network controller requires the interchange of a significant amount of data which will impose a large time-critical overhead on the system and perhaps limit the maximum speed with which a handover can be made.

An object of the present invention is to mitigate these problems in handover in microcellular radio systems.

According to a first aspect of the present invention there is provided a cellular radio system comprising a plurality of geographically separate base stations distributed so as to define a plurality of contiguous radio cells, means for enabling the base stations to communicate with each other, and at least one network controller for controlling a group of the base stations, wherein each base station has means permitting two-way communication with a mobile radio unit present in its cell on a predetermined radio channel and means responsive to the signal quality parameters of the predetermined radio channel becoming unacceptable for establishing another radio link with the mobile radio unit, characterised in that there is provided means responsive to the establishment of two-way communication between a mobile radio unit and a base station on a predetermined radio channel, for requesting the base stations of a subset of cells, at least one of which is adjacent to the cell in which the mobile radio unit is presently in, to reserve a channel from the plurality of channels available to each of the base stations, and in that in response to determining that the signal quality parameters of the radio channel between the current base station and the mobile radio unit becoming unacceptable handover is made to a previously reserved radio channel in one of the subset of the adjacent cells.

According to a second aspect of the present invention there is provided a method of operating a cellular radio system comprising a plurality of geographically separate base stations distributed so as to define a plurality of continuous radio cells, means for enabling the base stations to communicate with each other and at least one network controller for controlling a group of the base stations, wherein each base station has means permitting two-way communication with a radio unit in its cell on a predetermined radio channel and means responsive to the signal quality parameters of the predetermined radio channel becoming unacceptable for establishing another radio link with the mobile radio unit, characterised in that when a mobile radio unit in one of said cells establishes two-way communication with the base station of said one cell, said base station forms a subset of cells, at least one of which is adjacent to its own cell by requesting the base stations of said subset of cells to reserve a channel in anticipation of handing over the communication with the mobile radio unit to one of the base stations of the subset in response to the signal quality parameters becoming unacceptable.

In an embodiment of the present invention the network controller or base station includes means for collating a statistical data base of handover traffic to and from each of its cells, said means being operative, in response to being requested to reserve a channel, to take its statistical data base into account when making a decision to comply with a cell reservation request. Said means can also estimate the period of time before a handover is required. Collating a statistical data base of handover traffic enables a more efficient use of the channels allocated to each cell. If for example it is known that a mobile follows a particular route from one cell to the next, then those base stations in the cells of each subset not lying on the particular route can assign a low priority to a reservation request whilst the cell(s) of each subset lying on the particular route can assign a high priority to the reservation request. By being able to estimate the period of time before a handover is required, the actual reservation can be deferred until nearer the time required. In the meantime the channel is available to other users.

The present invention will now be described, by way of example, with reference to the accompanying drawings, wherein:
Figure 1 is a diagram of a portion of a cellular radio system, and
Figure 2 is a diagram illustrating the signalling sequences involved in handover.

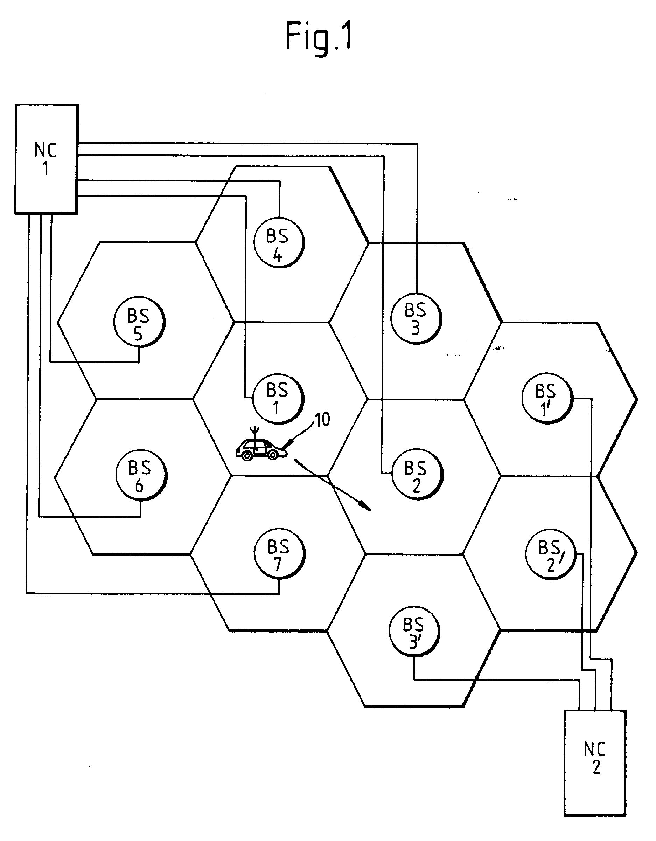

Referring to Figure 1, the overall area to be covered by the radio system is subdivided into cells by positioning of base stations BS at different geographical locations. For convenience of illustration the cells have been shown as identical hexagons but in reality the cells will be non-uniform and the size of the cells in busy city areas will be smaller than those in rural areas. The smallest size of a cell will typically be of the order of 50m radius.

The base stations in groups of cells are connected for example by land lines to a network controller NC which manages the operation of its group of cells. For the purposes of illustration the network controller NC 1 manages the base stations BS1 to BS7 and the network controller NC 2 manages BS1′ to BS3′. Although not shown the base stations associated with a particular network controller may be interconnected as rings, stars, delta arrangements and/or meshes complete or incomplete.

Assuming that a mobile 10 is on a journey the route of which takes it through the cells having base stations BS1, BS2 and BS2′. Whilst in the radio range of BS1 the mobile 10 initiates a call by making a request to the base station BS1. As part of making the request the mobile sends its own identity, the called party's identity, and its own authentication code. This information is relayed from BS1 to network controller NC1 which checks details of the callerss service and cell authorisations and the caller's account, credit-worthiness and acceptable charging rates from the caller's home location register. Having established that this information is satisfactory, the network controller NC1 instructs the base station to set-up the call and the call proceeds on one of the speech channels allocated to BS1. Additionally, in anticipation of the mobile 10 moving out of its present cell, the NC1 passes details of the mobile 10 to the base stations BS2 to BS7 of a subset of adjacent cells and in response to these details each of the base stations BS2 to BS7 decides whether or not to reserve a channel from the group available to it. As the call continues and the mobile 10 proceeds to the edge of the cell defined by BS1, the base station BS1 monitors the signal quality parameters of the signals from the mobile 10 and when it is evident that communications are degrading beyond an acceptable quality, the network controller NC1 initiates a handover procedure which, in this example, is to base station BS2. As part of the handover process certain information, such as call duration, time the cell was entered, and time spent in the previous cells is transferred. Because other information about the calling party has already been stored in the network controller NC1, there is no need to transfer it. In consequence the time involved in handing the mobile 10 over from BS1 to BS2 is reduced and since the base station BS2 has already reserved one of its channels the call is transferred with the minimum of necessary time critical hand shaking. Network controller NC1 then instructs BS1 to stop transmitting to, and receiving calls from, the mobile 10 and in response to this instruction, the base station BS1 informs the base stations of its subset of cells that it is relinquishing its communication with the mobile 10. The base station BS2 creates a new subset of cells by informing its neighbouring base stations that it has taken over the communication with the mobile 10. In response to the signalling by the base stations BS1 and BS2, the base stations BS4, BS5 and BS6 may decide not to continue with reserving a channel. However as part of the operation required to form a new subset, the network controller NC1 communicates the necessary details relating to the mobile 10 to the network controller NC2 so that it can inform the base stations BS1′, BS2′ and BS3′ of the fact that the base station BS2 is handling the call and that they can reserve a channel in view of the possibility of the mobile 10 entering one of their cells.

In the event, the mobile 10 enters the cell defined by the base station BS2′ and because of the early registration of the mobile's call details with network controller NC2 (or the base station BS2′) the handover can take place rapidly.

The concept of alerting base stations of cells adjacent to the cell in which a mobile is present has some other beneficial features. For example if a base station should fail while a mobile is passing through its cell, the network controller can arrange for base stations in the reserved adjacent cells to try and take over the call and avoid it being lost.

The foregoing example assumes a certain sharing of the management and switching functions between the network controllers and the base stations. However the manner of sharing these functions may differ to suit the application of the system and/or to suit the hieratical structure of the system.

In certain special situations for example where a mobile is proceeding along a part of a motorway not having any exits or where the user is on a train, the network controllers and/or base stations on determining this fact avoid reserving channels in those "adjacent" cells which it is predictable that the user will not pass. However as the mobile or train may be cruising at a relatively high speed, then the network controllers and/or base stations may form a subset of cells which are aligned with the route to be taken and because of the speed factor more than one cell ahead of the path of movement may be reserved so that successive handovers can be effected with the minimum of delay.

By the system being able to make use of knowledge of the direction of travel, it will also be able to warn a user of possible anticipated loss of service due to factors such as full cells, no cells or access denied. One method accomplishing this is for the forwarded user data to have a "distance from owner" tag associated with it. Such a tag would have its value changed every time it was forwarded, in anticipation of the forward speed being maintained, and have its value changed in the opposite sense as the user's time spent in successive cells decreases due to the user travelling faster. The value assigned to the tag could then be used to determine whether user and his call details have been forwarded by a reasonable amount. The value of the tag could also be used to give an indication of the power levels required for a base station of an adjacent cell to communicate with the user, should the need arise.

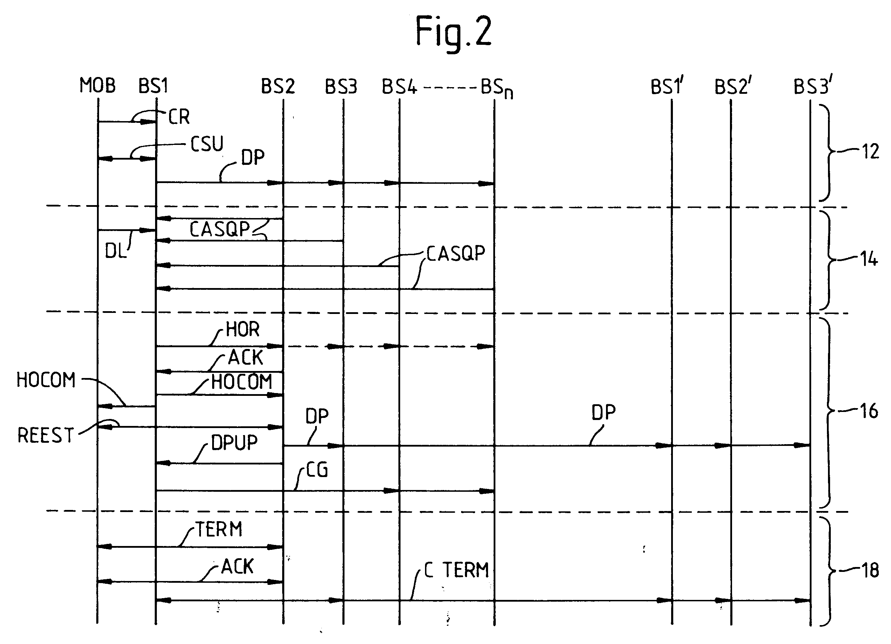

Figure 2 represents some examples of the signalling involved in the system made in accordance with the present invention. The broken lines indicate the demarcations between different signalling modes, commencing at the top and working downwards, the bands 12 to 18 respectively comprise a call set-up mode, a channel monitoring mode, a call hand-over mode and a call termination mode. Referring to the band 12, a mobile MOB transmits a call request (CR) to its local base station BS1. The base station BS1 then sets-up a virtual circuit with the mobile MOB which is indicated by the double headed arrow CSU. When the circuit is set-up, that is the access rights have been determined and the call is connected through the network, the base station BS1 communicates a data packet DP comprising the call's description and requirement record to its adjacent cells having base stations BS2 to BSn. The call set-up procedure is now complete.

As the call continues the channel is monitored, band 14, by the base stations BS2 to BSn of the adjacent cells sending indications of channel availability and measurements of signal quality parameters CASQP to base station BS1. The mobile station MOB measures the signal quality parameters for the downlink DL, that is the transmissions from a base station, which the mobile station either relays to the base station BS1 or monitors itself until such time as handover is deemed to be necessary. This process will be repeated on a regular or irregular basis until a handover or call termination is required.

Referring to the band 16, when the base station BS1 decides that a handover is required, it sends a handover request HOR to the most suitable adjacent cell which has previously indicated that it has a channel available in this example the base station BS2. The destination base station BS2 then acknowledges ACK to BS1 that it can accept the call. The base station BS1 then transmits handover command signal HOCOM to the base station BS2 and to the mobile MOB. The call is then re-established REEST between the mobile MOB and the base station BS2. The BS2 then sends data packets DP to the base stations of those cells which form the neighbours to the cell in which the mobile MOB is present. In the case of the base station BS1, to reduce the information flow only an update data packet DPUP is sent by BS2 to it. Once the handover is complete BS1 transmits a call gone message CG to its original neighbouring cells. The system then reverts to its channel monitoring mode.

In the call termination mode 18, a call termination request TERM is issued by either the mobile MOB or the base station involved, in this example BS2, as a result of either party terminating the call. The recipient of the terminate request TERM acknowledges ACK the request and vacates the speech channel. The base station BS2 then informs the base stations of its subset of neighbouring cells that the call has been terminated CTERM, and that the network connection can be cleared down and that any reserved radio channels associated with that call can be released. Finally the caller is billed.

Distributing data in advance of handover to cells which are adjacent to the one in which the mobile is present has a number of other benefits besides facilitating a smooth handover. These other benefits include the instigation of signal quality parameters measurements at the earliest possible moment so that the system can be ready sooner for handover. Access rights between base stations can be established in advance. Base stations can monitor handover traffic from adjacent cells to collate a statistical data base of handover traffic flow to and from adjacent cells and user's mobility habits. With this knowledge, the base station can estimate the proportion of users likely to require handover from particular neighbours and the likely delay before the associated handover request is made. Using such information the base station can maintain and modify a pool of channels which are reserved against allocation to new calls in order that the system can cope with existing calls which it is anticipated will be transferred from one cell to the next. The network controller or base station can warn current users of an impending loss of service due to adjacent cells being full, cells which are temporarily out of use due to a fault in a base station or there are no adjacent cells in the estimated direction of travel. In the event of a base station failing, then those calls which have channels already reserved for their use in adjacent cells may have some chance of being recovered and continued. The call history in a call data packet will allow the network controller or base station to note a user moving rapidly through a succession of cells and if necessary to adjust the processing priorities.

## Claims

1. A cellular radio system comprising a plurality of geographically separate base stations (BS1 to 7, BS1′ to 3′) distributed so as to define a plurality of contiguous radio cells, means for enabling the base stations to communicate with each other, and at least one network controller (NC1, NC2) for controlling a group of the base stations, wherein each base station has means permitting two-way communication with a mobile radio unit (10) present in its cell on a predetermined radio channel and means responsive to the signal quality parameters of the predetermined radio channel becoming unacceptable for establishing another radio link with the mobile radio unit (10), characterised in that there is provided means responsive to the establishment of two-way communication between a mobile radio unit (10) and a base station (BS1) on a predetermined radio channel, for requesting the base stations (BS2 to BS7) of a subset of cells, at least one of which is adjacent to the cell in which the mobile radio unit (10) is presently in, to reserve a channel from the plurality of channels available to each of the base stations (BS2 to BS7), and in that in response to determining that the signal quality parameters of the radio channel between the current base station (BS1) and the mobile radio unit (10) becoming unacceptable handover is made to a previously reserved radio channel in one of the subset of the adjacent cells.

2. A system as claimed in Claim 1, characterised in that the base station (BS1) handing over the mobile radio unit (10) comprises means for informing the base stations (BS2 to 7) of the cells comprising its subset of cells that it is relinquishing communication with the mobile.

3. A system as claimed in Claim 1 or 2, characterised in that a base station (BS2) has means, responsive to taking-over a call, for informing the base stations (BS1, 3, 7, 1′, 2′, 3′) in its neighbouring cells of this fact and to request them to reserve a channel.

4. A system as claimed in Claim 1, 2 or 3, characterised in that the network controller (NC1, NC2) or base station (BS) comprises means for building-up a call history of a mobile radio unit (10) and, in response to determining that a mobile radio unit (10) is moving along a predictable route, for forming subsets of cells aligned with said route.

5. A system as claimed in any one of Claims 1 to 4, characterised in that the network controller (NC1, NC2) or base station (BS) has means for requesting at least one base station (BS2 to 7) of the subset of cells to take-over the communication with the mobile radio unit (10) in the event of failing of the base station (BS1) in the cell in which the mobile is present.

6. A system as claimed in any one of Claims 1 to 5, characterised in that the base stations (BS2 to 7) of said subset of cells have means for monitoring the signal quality parameters of the communication between the base station (BS1) of the cell in which the mobile radio unit is present and the mobile radio unit (10).

7. A system as claimed in any one of Claims 1 to 6, characterised in that a network controller (NC1, NC2) includes means for collating a statistical data base of handover traffic to and from respective cells which are controlled by the network controller (NC1) and for taking the statistical data base into account when making a decision to comply with a cell reservation request.

8. A system as claimed in Claim 7, characterised in that the network controller (NC1, NC2) further comprises means for estimating the period of time before a handover is required.

9. A system as claimed in any one of Claims 1 to 6, characterised in that each base station (BS) includes means for collating a statistical data base of handover traffic to and from itself, said means being operative, in response to being requested to reserve a channel, to take its statistical data base into account when making a decision to comply with a cell reservation request.

10. A system as claimed in Claim 9, characterised in that each base station (BS) further comprises means for estimating the period of time before a handover is required.

11. A method of operating a cellular radio system comprising a plurality of geographically separate base stations (BS1 to 7, BS1′ to 3′) distributed so as to define a plurality of continuous radio cells, means for enabling the base stations to communicate with each other and at least one network controller (NC1, NC2) for controlling a group of the base stations, wherein each base station has means permitting two-way communication with a radio unit (10) in its cell on a predetermined radio channel and means responsive to the signal quality parameters of the predetermined radio channel becoming unacceptable for establishing another radio link with the mobile radio unit, characterised in that when a mobile radio unit (10) in one of said cells establishes two-way communication with the base station (BS1) of said one cell, said base station (BS1) forms a subset of cells, at least one of which is adjacent to its own cell by requesting the base stations (BS2 to 7) of said subset of cells to reserve a channel in anticipation of handing over the communication with the mobile radio unit (10) to one of the base stations (BS2 to 7) of the subset in response to the signal quality parameters becoming unacceptable.

12. A method as claimed in Claim 11, characterised in that on handover the base station (BS2) taking over the communication with the mobile forms its own subset of cells (BS1, 7, 1′, 2′, 3′).

13. A method as claimed in Claim 11 or 12, characterised in that the base station (BS1) with which the mobile radio unit (10) was previously communicating transmits at least to the base stations (BS2 to 7) of its subset a message informing them that it is relinquishing the call.

14. A method as claimed in Claim 11, 12 or 13 characterised in that the network controller (NC1, NC2) or base station (BS) builds up a call history of a mobile radio unit (10) and, on determining that a mobile radio unit (10) is moving along a predictable route, instructs the formation of subsets of cells aligned with said route.

15. A method as claimed in any one of Claims 11 to 14, characterised in that in the event of failing of the base station (BS) in the cell in which the mobile radio unit is present, the network controller (NC1, NC2) requests at least one base station (BS2 to 7) of the subset of cells to take-over the communication with the mobile radio unit (10).

16. A method as claimed in any one of Claims 11 to 15, characterised in that the base stations (BS2 to 7) of the subset of cells monitor the signal quality parameters of the communications between the base station (BS1) of the cell in which the mobile radio unit is present and the mobile radio unit (10).

17. A method as claimed in any one of Claims 11 to 16, characterised in that a network controller (NC1, NC2) collates a statistical data base of handover traffic to and from the respective cells which are controlled by the network controller (NC1, NC2) and in that it takes the statistical data base into account when making a decision to comply with a cell reservation request.

18. A method as claimed in Claim 17, characterised in that the network controller (NC1, NC2) estimates the period of time before a handover is required.

19. A method as claimed in any one of Claims 11 to 16, characterised in that each base station (BS) collates a statistical data base of handover traffic to and from itself and in response to being requested to reserve a channel, takes its statistical data base into account when making a decision to comply with a cell reservation request.

20. A method as claimed in Claim 19, characterised in that each base station (BS) estimates the period of time before a handover is required.

## Patentansprüche

1. Ein Zellenfunksystem mit einer Vielzahl an geographisch getrennten Basisstationen (BS1 bis 7, BS1′ bis 3′), derart angebracht, daß sie eine Vielzahl an aneinandergrenzende Funkzellen darzustellen, mit Mitteln zur Ermöglichung interner Kommunikation zwischen den Funkstationen und mindestens einer Netzwerksteuerung (NC1, NC2) zur Steuerung einer Gruppe von Basisstationen, wobei jede Basisstation über Mittel zur Ermöglichung von Zwei-Wege-Kommunikation mit einer mobilen Funkeinheit (10), die sich in ihrer Zelle auf einem vorbestimmten Funkkanal befindet, und Mitteln der responsiven Erfassung der Signal-Qualitätsparameter des vorbestimmten Funkkanals verfügt, um bei deren Unzulänglichkeit eine neue Funkverbindung mit der mobilen Funkeinheit (10) einzurichten, mit dem Kennzeichen, daß Mittel für den Aufbau einer Zwei-Wege-Kommunikation zwischen einer mobilen Funkeinheit (10) und einer Basisstation (BS1) auf einem vorbestimmten Funkkanal zur Verfügung stehen, um von den Basisstationen (BS2 bis BS7) von Unterzellen, von denen mindestens eine an die Zelle angrenzt, in der sich die mobile Funkeinheit (10) befindet, einen Kanal der Vielzahl jeder Basisstation (BS2 bis BS7) zur Verfügung stehenden Kanäle zur Verfügung zu stellen, und als Reaktion bei der Feststellung, daß die Signal-Qualitätsparameter des Funkkanals zwischen der aktuellen Funkstation (BS1) und der mobilen Funkeinheit (10) unzulänglich werden, eine Umschaltung auf einen zuvor reservierten Funkkanal einer der angrenzenden Unterzellen vorzunehmen.

2. Ein System laut Anspruch 1, mit dem Kennzeichen, daß die Basisstation (BS1), die die mobile Funkeinheit (10) umschalted, über Mittel für die Information an die Basisstationen (BS2 bis 7) der Zellen einschließlich der Unterzellen verfügt, daß sie die Kommunikation mit dem mobilen Telefon abbricht.

3. Ein System laut Anspruch 1 oder 2, mit dem Kennzeichen, daß eine Basisstation (BS2) über responsive Mittel zur Übernahme eines Gesprächs, der Mitteilung dieser Tatsache an die Basisstation (BS1, 3, 7, 1′, 2′, 3′) ihrer angrenzenden Zellen und Mittel zur Anweisung dieser Zellen verfügt, einen Kanal zu reservieren.

4. Ein System laut Anspruch 1, 2 oder 3, mit dem Kennzeichen, daß die Netzwerksteuerung (NC1, NC2) oder Basisstation (BS) über Mittel für die Aufstellung des Anrufverlaufs einer mobilen Funkeinheit (10), und, als Reaktion auf die Feststellung, daß sich die mobile Funkeinheit (10) entlang einer vorhersehbaren Route bewegt, für die Bildung von Unterzellen entlang der besagten Route verfügt.

5. Ein System laut einem der Ansprüche 1 bis 4, mit dem Kennzeichen, daß die Netzwerksteuerung (NC1, NC2) oder die Basisstation (BS) über Mittel zur Anforderung bei mindestens einer der Basisstationen (BS2 bis 7) der Unterzellen verfügt, die Verbindung mit der mobilen Funkeinheit (10) in dem Fall zu übernehmen, daß die Basisstation (BS1) der Zelle, in der sich das mobile Telefon befindet, ausfällt.

6. Ein System laut einem der Ansprüche 1 bis 5, mit dem Kennzeichen, daß die Basisstationen (BS2 bis 7) der besagten Unterzellen über Mittel zur Überwachung der Signal-Qualitätsparameter der Kommunikation zwischen der Basisstation (BS1) der Zelle, in der sich die mobile Funkeinheit befindet, und der mobilen Funkeinheit (10) verfügt.

7. Ein System laut einem der Ansprüche 1 bis 6, mit dem Kennzeichen, daß eine Netzwerksteuerung (NC1, NC2) über Mittel zur Erstellung einer statistischen Datenbank des Umschaltverkehrs zu und von den jeweiligen Zellen, die von der Netzwerksteuerung (NC1) gesteuert werden, und für die Berücksichtigung der statistischen Datenbank bei der Entscheidung, eine angeforderte Zellenreservierung vorzunehmen, verfügt.

8. Ein System laut Anspruch 7, mit dem Kennzeichen, daß die Netzwerksteuerung (NC1, NC2) außerdem über Mittel zur Einschätzung der Zeit verfügt, bevor eine Umschaltung erforderlich wird.

9. Ein System laut einem der Ansprüche 1 bis 6, mit dem Kennzeichen, daß jede Basisstation (BS) über Mittel für die Aufstellung einer statistischen Datenbank des Umschaltverkehrs zu und von sich selbst verfügt, diese Mittel werden als Reaktion darauf abgerufen, wenn die Reservierung eines Kanals angefordert wird, um die statistische Datenbank bei der Entscheidung zu berücksichtigen, eine angeforderte Zellreservierung vorzunehmen.

10. Ein System laut Anspruch 9, mit dem Kennzeichen, daß jede Basisstation (BS) außerdem über Mittel zur Einschätzung der Zeit verfügt, bevor eine Umschaltung erforderlich wird.

11. Eine Methode zum Betrieb eines Zellenfunksystems mit einer Vielzahl an geographisch getrennten Basisstationen (BS1 bis 7, BS1′ bis 3′), verteilt um eine Vielzahl an aneinandergrenzenden Funkzellen, mit Mitteln, um die interne Kommunikation der Funkstationen zu ermöglichen und mindestens einer Netzwerksteuerung (NC1, NC2) zur Steuerung einer Gruppe von Basisstationen, wobei jede Basisstation über Mittel zur Ermöglichung von Zwei-Wege-Kommunikation mit einer Funkeinheit (10) in ihrer Zelle auf einem vorbestimmten Funkkanal und über responsive Mittel für die Signal-Qualitätsparameter des vorbestimmten Funkkanals verfügt, um bei deren Unzulänglichkeit eine andere Funkverbindung mit der mobilen Funkeinheit einzurichten, mit dem Kennzeichen, daß bei der Aufnahme von Zwei-Wege-Kommunikation einer mobilen Funkeinheit (10) in einer der besagten Zellen mit der Basisstation (BS1) der besagten Zelle die besagte Basisstation (BS1) Unterzellen bildet, von denen mindestens eine an ihre eigene Zelle angrenzt, um bei den Basisstationen (BS2 bis 7) der besagten Unterzellen die Reservierung eines Kanals hinsichtlich dessen anzufordern, die Verbindung zu der mobilen Funkeinheit (10) als Reaktion auf unzulänglich werdende Signal-Qualitätsparameter zu einer der Basisstationen (BS2 bis 7) der Unterzellen umzuschalten.

12. Eine Methode laut Anspruch 11, mit dem Kennzeichen, daß beim Umschalten auf die Basisstation (BS2) diese bei der Übernahme der Verbindung mit dem mobilen Telefon ihre eigenen Unterzellen bildet (BS1, 3, 7, 1′, 2′, 3′).

13. Eine Methode laut der Ansprüche 11 oder 12, mit dem Kennzeichen, daß die Basisstation (BS1), mit der die mobile Funkeinheit (10) zuvor verbunden war, letztlich den Basisstationen (BS2 bis 7) der Unterzellen eine Nachricht übermittelt, daß sie das Gespräch abbricht.

14. Eine Methode laut der Ansprüche 11, 12 oder 13, mit dem Kennzeichen, daß die Netzwerksteuerung (NC1, NC2) oder Basisstation (BS) den Anrufsverlauf einer mobilen Funkeinheit (10) aufstellt, indem sie feststellt, daß sich die mobile Funkeinheit (10) entlang einer vorhersehbaren Route bewegt und die Bildung von Unterzellen entlang der besagten Route veranlaßt.

15. Eine Methode laut einem der Ansprüche 11 bis 14, mit dem Kennzeichen, daß im Falle des Ausfalls der Basisstation (BS) der Zelle, in der sich die mobile Funkeinheit befindet, die Netzwerksteuerung (NC1, NC2) mindestens eine der Basisstationen (BS2 bis 7) der Unterzellen anfordert, die Verbindung mit der mobilen Funkeinheit (10) zu übernehmen.

16. Eine Methode laut einem der Ansprüche 11 bis 15, mit dem Kennzeichen, daß die Basisstationen (BS2 bis 7) der besagten Unterzellen die Signal-Qualitätsparameter der Kommunikation zwischen der Basisstation (BS1) der Zelle, in der sich die mobile Funkeinheit befindet, und der mobilen Funkeinheit (10) überwacht.

17. Eine Methode laut einem der Ansprüche 11 bis 16, mit dem Kennzeichen, daß eine Netzwerksteuerung (NC1, NC2) eine statistische Datenbank des Umschaltverkehrs zu und von den jeweiligen Zellen, die von der Netzwerksteuerung (NC1, NC2) gesteuert werden, erstellt, und diese statistische Datenbank bei der Entscheidung, eine angeforderte Zellenreservierung vorzunehmen, berücksichtigt.

18. Eine Methode laut Anspruch 17, mit dem Kennzeichen, daß die Netzwerksteuerung (NC1, NC2) die Zeit, bevor eine Umschaltung erforderlich wird, einschätzt.

19. Eine Methode laut einem der Ansprüche 11 bis 16, mit dem Kennzeichen, daß jede Basisstation (BS) eine statistische Datenbank des Umschaltverkehrs zu und von sich selbst aufstellt und bei der Anforderung zur Reservierung eines Kanals diese statistische Datenbank bei der Entscheidung, eine angeforderte Zellreservierung vorzunehmen, berücksichtigt.

20. Ein System laut Anspruch 19, mit dem Kennzeichen, daß jede Basisstation (BS) den Zeitraum einschätzt, bevor eine Umschaltung erforderlich wird.

## Revendications

1. Système de radiocommunication cellulaire comprenant une pluralité de stations de base séparées géographiquement (BS1 à 7, BS1′ à 3′) qui sont réparties de manière à définir une pluralité de cellules de radiocommunication contiguës, des moyens pour permettre à ces stations de base de communiquer entre elles et au moins une unité de contrôle de réseau (NC1, NC2) pour contrôler un groupe de stations de base où chaque station de base dispose de moyens permettant la communication bilatérale avec un mobilophone (10) présent dans sa cellule par un canal de radiocommunication prédéterminé et des moyens réagissant au fait que les paramètres de qualité du signal du canal de radiocommunication prédéterminé deviennent inacceptables pour établir une autre liaison hertzienne avec le mobilophone (10), caractérisé en ce que sont prévus des moyens réagissant à l'établissement d'une communication bilatérale entre un mobilophone (10) et une station de base (BS1) par un canal de radiocommunication prédéterminé pour demander aux stations de base (BS2 à BS7) d'un sous-ensemble de cellules dont au moins une est adjacente à la cellule dans laquelle se trouve présentement le mobilophone (10) de réserver un canal de la pluralité de canaux disponibles pour chacune des stations de base (BS2 à BS7) et en ce qu'en réaction à la détermination du fait que les paramètres de qualité du signal du canal de radiocommunication entre la station de base en question et le mobilophone (10) deviennent inacceptables, un transfert est réalisé vers un canal de radiocommunication réservé au préalable dans l'un des sous-ensembles de cellules adjacentes.

2. Système suivant la revendication 1, caractérisé en ce que la station de base (BS1) transférant le mobilophone (10) comprend des moyens pour informer les stations de base (BS2 à 7) des cellules comprenant son sous-ensemble de cellules qu'il abandonne la communication avec le mobilophone.

3. Système suivant la revendication 1 ou 2, caractérisé en ce qu'une station de base (BS2) comporte des moyens réagissant à la reprise d'une communication pour informer les stations de base (BS1, 3, 7, 1′, 2′, 3′) dans ses cellules voisines de ce fait et pour leur demander de réserver un canal.

4. Système suivant la revendication 1, 2 ou 3, caractérisé en ce que l'unité de contrôle de réseau (NC1, NC2) ou la station de base (BS) comprend des moyens pour constituer un historique de communication d'un mobilophone (10) et en réaction à la détermination du fait qu'un mobilophone (10) se déplace suivant un trajet prévisible, pour former des sous-ensembles de cellules alignées sur ce trajet.

5. Système suivant l'une quelconque des revendications 1 à 4, caractérisé en ce que l'unité de contrôle de réseau (NC1, NC2) ou la station de base (BS) comporte des moyens pour demander à au moins une station de base (BS2 à 7) du sous-ensemble de cellules de reprendre la communication avec le mobilophone (10) dans le cas d'une défaillance de la station de base (BS1) dans la cellule dans laquelle le mobilophone est présent.

6. Système suivant l'une quelconque des revendications 1 à 5, caractérisé en ce que les stations de base (BS2 à 7) de ce sous-ensemble de cellules comportent des moyens pour surveiller les paramètres de qualité du signal de la communication entre la station de base (BS1) de la cellule dans laquelle le mobilophone est présent et le mobilophone (10).

7. Système suivant l'une quelconque des revendications 1 à 6, caractérisé en ce qu'une unité de contrôle de réseau (NC1, NC2) comporte des moyens pour collationner une base de données statistiques du trafic de transfert vers et depuis les cellules respectives qui sont contrôlées par l'unité de contrôle de réseau (NC1) et pour tenir compte de la base de données statistiques lors de la prise d'une décision visant à satisfaire une demande de réservation de cellule.

8. Système suivant la revendication 7, caractérisé en ce que l'unité de contrôle de réseau (NC1, NC2) comprend, en outre, des moyens pour évaluer le délai qui s'écoule avant qu'un transfert ne soit requis.

9. Système suivant l'une quelconque des revendications 1 à 6, caractérisé en ce que chaque station de base (BS) comporte des moyens pour collationner une base de données statistiques du trafic de transfert vers et depuis elle-même, ces moyens intervenant en réaction au fait qu'il leur est demandé de réserver un canal pour prendre la base de données statistiques en compte lors de la prise d'une décision visant à satisfaire une demande de réservation de cellule.

10. Système suivant la revendication 9, caractérisé en ce que chaque station de base (BS) comprend, en outre, des moyens pour évaluer le délai qui s'écoule avant qu'un transfert ne soit requis.

11. Procédé de conduite d'un système de radiocommunication cellulaire comprenant une pluralité de stations de base séparées géographiquement (BS1 à 7, BS1′ à 3′) qui sont réparties de manière à définir une pluralité de cellules de radiocommunication contiguës, des moyens pour permettre à ces stations de base de communiquer entre elles et au moins une unité de contrôle de réseau (NC1, NC2) pour le contrôle d'un groupe de stations de base où chaque station de base dispose de moyens permettant la communication bilatérale avec un mobilophone (10) présent dans sa cellule par un canal de radiocommunication prédéterminé et des moyens réagissant au fait que les paramètres de qualité du signal du canal de radiocommunication prédéterminé deviennent inacceptables pour établir une autre liaison hertzienne avec le mobilophone, caractérisé en ce que lorsqu'un mobilophone (10) présent dans l'une desdites cellules établit une communication bilatérale avec la station de base (BS1) de ladite cellule, cette station de base (BS1) forme un sous-ensemble de cellules dont une au moins est adjacente à sa propre cellule en demandant aux stations de base (BS2 à 7) de ce sous-ensemble de cellules de réserver un canal en prévision d'un transfert de la communication avec le mobilophone vers l'une des stations de base du sous-ensemble en réaction au fait que les paramètres de qualité du signal deviennent inacceptables.

12. Procédé suivant la revendication 11, caractérisé en ce que, lors du transfert, la station de base (BS2) qui reprend la communication avec le mobilophone forme son propre sous-ensemble de cellules (BS1, 3, 7, 1′, 2′, 3′).

13. Procédé suivant la revendication 11 ou 12, caractérisé en ce que la station de base (BS1) avec laquelle le mobilophone (10) était précédemment en communication émet au moins vers les stations de base (BS2 à 7) de son sous-ensemble, un message les informant qu'il abandonne la communication.

14. Procédé suivant la revendication 11, 12 ou 13, caractérisé en ce que l'unité de contrôle de réseau (NC1, NC2) ou la station de base (BS) établit un historique de communication d'un mobilophone (10) et, lors de la détermination du fait qu'un mobilophone (10) se déplace suivant un trajet prévisible, elle ordonne la formation de sous-ensembles de cellules alignées sur ce trajet.

15. Procédé suivant l'une quelconque des revendications 11 à 14, caractérisé en ce que dans le cas d'une défaillance de la station de base (BS) dans la cellule dans laquelle le mobilophone est présent, l'unité de contrôle de réseau (NC1, NC2) demande au moins à une station de base (BS2 à 7) du sous-ensemble de cellules de reprendre la communication avec le mobilophone (10).

16. Procédé suivant l'une quelconque des revendications 11 à 15, caractérisé en ce que les stations de base (BS2 à 7) du sous-ensemble de cellules surveillent les paramètres de qualité du signal des communications entre la station de base (BS1) de la cellule dans laquelle le mobilophone est présent et le mobilophone (10).

17. Procédé suivant l'une quelconque des revendications 11 à 16, caractérisé en ce qu'une unité de contrôle de réseau (NC1, NC2) collationne une base de données statistiques du trafic de transfert vers et depuis les cellules respectives qui sont contrôlées par l'unité de contrôle de réseau (NC1, NC2) et en ce qu'elle prend en compte la base de données statistiques lors de la prise d'une décision visant à satisfaire à une demande de réservation de cellule.

18. Procédé suivant la revendication 17, caractérisé en ce que l'unité de contrôle de réseau (NC1, NC2) évalue le délai qui s'écoule avant qu'un transfert ne soit requis.

19. Procédé suivant l'une quelconque des revendications 11 à 16, caractérisé en ce que chaque station de base (BS) collationne une base de données statistiques du trafic de transfert vers et depuis elle-même et, en réaction au fait qu'il lui est demandé de réserver un canal, elle prend sa base de données statistiques en compte lors de la prise d'une décision visant à satisfaire à une demande de réservation de cellule.

20. Procédé suivant la revendication 19, caractérisé en ce chaque station de base (BS) évalue le délai qui s'écoule avant qu'un transfert ne soit requis.
